# EUROPEAN PATENT SPECIFICATION

(11) **EP 3 266 618 B1**
(45) Date of publication and mention of the grant of the patent: **27.02.2019**
(21) Application number: 17180334.9
(22) Date of filing: 07.07.2017
(51) Int. Cl.: B41J 3/407, B41J 11/00, B65H 7/14, B65C 9/44

(54) **THERMAL PRINTER AND METHOD FOR IMPROVING DETECTION PRECISION BY THE SAME**
THERMODRUCKER UND VERFAHREN ZUR VERBESSERUNG DER DETEKTIONSPRÄZISION DAMIT
IMPRIMANTE THERMIQUE ET PROCÉDÉ POUR AMÉLIORER SA PRÉCISION DE DÉTECTION

(30) Priority: 07.07.2016 JP 2016135006
(43) Date of publication of application: 10.01.2018
(73) Proprietor: Toshiba TEC Kabushiki Kaisha, Tokyo 141-8562 (JP)
(72) Inventor: KATSUMATA, Akio, Shinagawa-ku, Tokyo 141-8562 (JP)
(74) Representative: Takeuchi, Maya

(56) References cited:
- EP-A1- 0 699 608
- JP-A- 2012 035 952
- JP-A- 2013 063 834
- JP-A- 2015 209 296
- US-A1- 2009 102 878

## Description

### FIELD

Embodiments described herein relate generally to a label printer and a method for improving detection precision by the label printer.

### BACKGROUND

Conventionally, a label printer carries out detection of a printing position selectively using a transmission type sensor or a reflection type sensor depending on a printing medium to print on a label paper (label sheet) or a tag paper (tag sheet) . Further, conventionally, there is a technology for improving detection properties of a paper end with both the transmission type sensor and the reflection type sensor.

Incidentally, the transmission type sensor and the reflection type sensor are often arranged to be close to the top of a substrate. Thus, there is a problem that light from a light emitting element of one sensor migrates to a light receiving element side of the other sensor and it is consequently difficult to improve detection precision of the printing position.

JP 2013 063 834 A discloses a printer for detecting the presence or absence of a label, sign or subsequent paper, when it is being conveyed.

Further, US 2009 / 102 878 A discloses a label printer having a reflection photo-sensor, and a transmission photo-sensor and a recording medium detection method.

Light emission of the light emitting element of the sensor that is not used for the position detection may be stopped depending on the type of a paper in order to reduce influence of migrating light. However, it is desired to enable both the sensors to operate for detection of the paper end in order to improve the detection properties of the paper end as stated above. In this way, conventionally, a technology capable of realizing both the improvement of the detection precision of the printing position and the improvement of the detection precision of the paper end is desired.

### DESCRIPTION OF THE DRAWINGS

Fig. 1 is a block diagram illustrating the hardware constitution of a label printer according to an embodiment;
Fig. 2 is a circuit diagram illustrating a sensor control circuit;
Fig. 3 is a functional block diagram illustrating the label printer;
Fig. 4 is a schematic diagram illustrating an example of a light emission signal in a case in which a both light emission period is arranged for each paper conveyance operation for one line;
Fig. 5 is a schematic diagram illustrating an example of a light emission signal in a case in which the both light emission period is arranged for each paper conveyance operation for two lines;
Fig. 6 is a diagram illustrating operations for detecting an end part of a label paper;
Fig. 7 is a diagram illustrating operations for detecting an end part of a tag paper; and
Fig. 8 is a flowchart illustrating procedures of a light emission control processing carried out by the label printer.

### DETAILED DESCRIPTION

In accordance with an embodiment, a label printer comprises a transmission type sensor configured to enable a first light emitting element to emit light to irradiate a printing medium with the light and to detect light transmitted through the printing medium; a reflection type sensor configured to enable a second light emitting element to emit light to irradiate a printing medium with the light and to detect light reflected by the printing medium; and a light emission control module configured to alternately switch a single light emission period in which either the first light emitting element or the second light emitting element emits light and a both light emission period in which both the first light emitting element and the second light emitting element emit light.

The label printer may further comprise: a conveyance control module configured to control conveyance of the printing medium.

Preferably, the light emission control module arranges the both light emission period each time the conveyance control module conveys the printing medium by a predetermined distance.

Preferably, the light emission control module arranges the both light emission period each time the conveyance control module conveys the printing medium for one line.

Preferably, the light emission control module arranges the both light emission period each time the conveyance control module conveys the printing medium for a predetermined number of lines.

The label printer may further comprise: an end part detection module configured to detect an end part of the printing medium on the basis of detection results of the transmission type sensor and the reflection type sensor in the both light emission period.

Preferably, the light emission control module is further configured to switch between a HI state and a LO state.

Preferably, the transmission type sensor comprises the first light emitting element and a first light receiving element arranged to face each other across the printing medium.

Preferably, the reflection type sensor comprises the second light emitting element and a second light receiving element arranged in parallel in a same direction with respect to the printing medium.

Preferably, the first light and the second light have the same wavelength or range of wavelengths.

Preferably, the first light and the second light have a different wavelength or a different range of wavelengths.

The present invention further relates to a method for improving detection precision by a label printer which comprises a transmission type sensor configured to enable a first light emitting element to emit a first light to irradiate a printing medium with the first light and to detect the first light transmitted through the printing medium, and a reflection type sensor configured to enable a second light emitting element to emit a second light to irradiate a printing medium with the second light and to detect the second light reflected by the printing medium, comprising: alternately switching between a single light emission period in which either the first light emitting element or the second light emitting element emits light and a both light emission period in which both the first light emitting element and the second light emitting element emit light.

The method may further comprise :conveying of the printing medium; and arranging the both light emission period each time the printing medium is conveyed a predetermined distance.

The method may further comprise :arranging the both light emission period each time the printing medium is conveyed one line.

The method may further comprise: arranging the both light emission period each time the printing medium is conveyed a predetermined number of lines.

The method may further comprise: detecting an end part of the printing medium on the basis of detection results of the transmission type sensor and the reflection type sensor in the both light emission period.

The method may further comprise switching between a HI state and a LO state.

Preferably, the transmission type sensor emits the first light from the first light emitting element across the printing medium to the first light receiving element.

Preferably, the reflection type sensor emits the second light from the second light emitting element and the second light receiving element is arranged in parallel in a same direction with respect to the printing medium upon receiving the second light.

Preferably, the first light and the second light have the same wavelength or range of wavelengths.

Preferably, the first light and the second light have a different wavelength or a different range of wavelengths.

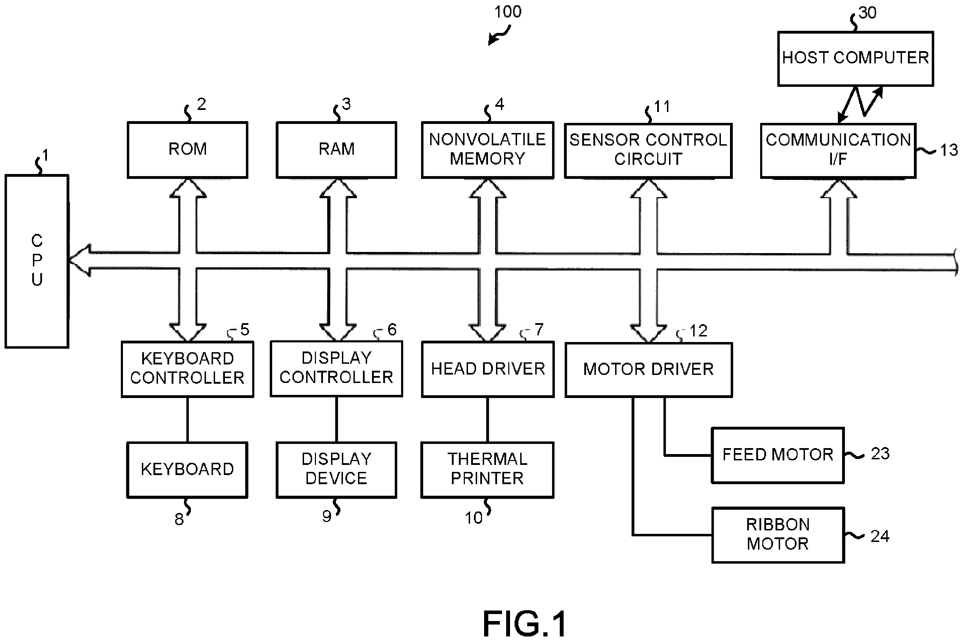

Fig. 1 is a block diagram illustrating the hardware constitution of a label printer 100 according to the present embodiment. The label printer 100 is equipped with a CPU (Central Processing Unit) 1, a ROM (Read Only Memory) 2, a RAM (Random Access Memory) 3, a nonvolatile memory 4, a keyboard controller 5, a display controller 6 and a head driver 7 which are connected with each other via bus lines or interfaces.

A keyboard 8 is connected with the keyboard controller 5. A display device 9 is connected with the display controller 6. A thermal printer 10 is connected with the head driver 7. The head driver 7 and the thermal printer 10 print characters or barcodes with an ink ribbon on a label paper and a tag paper serving as printing mediums. The label paper is a sheet obtained by sticking labels on a rolled paperboard having high light transmission at fixed intervals. The tag paper is a sheet obtained by printing a dark color mark (black mark) for alignment on the back surface of a sheet.

Further, a sensor control circuit 11, a motor driver 12 and a communication I/F (Interface) 13 are connected with the CPU 1. A feed motor 23 and a ribbon motor 24 are connected with the motor driver 12. The feed motor 23 is a motor for conveying the printing medium such as the label paper and the tag paper. For example, a stepping motor can be used as the feed motor 23. The ribbon motor 24 is a motor for conveying an ink ribbon for printing. The CPU 1 is connected with a host computer 30 serving as a host machine via the communication I/F 13 and a wireless communication line.

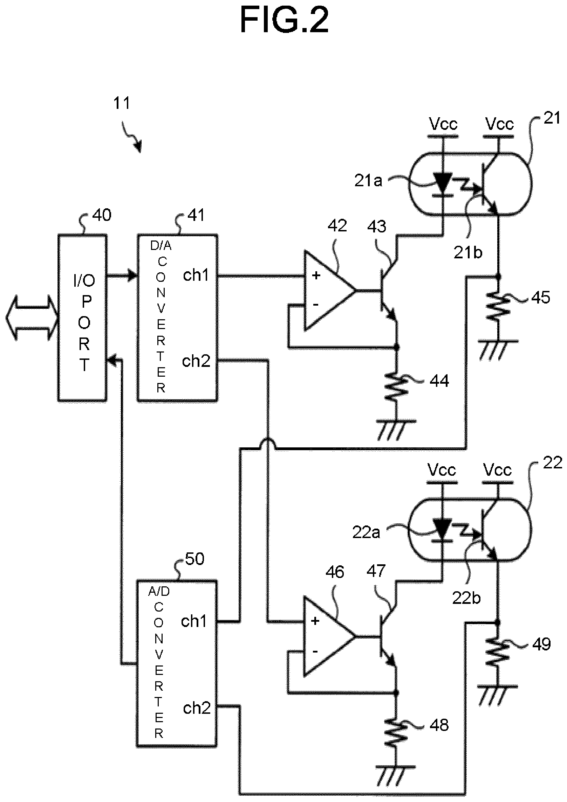

Fig. 2 is a circuit diagram illustrating the sensor control circuit 11. The sensor control circuit 11 is equipped with a transmission type sensor 21 and a reflection type sensor 22. The transmission type sensor 21 is equipped with a light emitting element 21a for emitting light to the label paper and a light receiving element 21b for detecting light transmitted through the label paper. The reflection type sensor 22 is equipped with a light emitting element 22a for emitting light to the tag paper and a light receiving element 22b for detecting light reflected from the tag paper. As the light emitting elements 21a and 22a, photodiodes may be used as shown in Fig. 2, or other light emitting elements may be used. Further, as the light receiving elements 21b and 22b, photo transistors may be used as shown in Fig. 2, or other light receiving elements may be used.

In one embodiment, light emitting element 21a and light emitting element 22a emit light having the same wavelength or range of wavelengths. In another embodiment, light emitting element 21a and light emitting element 22a emit light having a different wavelength or a different range of wavelengths.

The sensor control circuit 11 is equipped with an I/O (Input/Output) port 40, a D/A (Digital/Analog) converter 41, operational amplifiers 42 and 46, and NPN type transistors 43 and 47. The sensor control circuit 11 is further equipped with resistors 44, 45, 48 and 49. Further, the sensor control circuit 11 is equipped with an A/D (Analog/Digital) converter 50.

The CPU 1 (refer to Fig. 1) inputs a light emission instruction signal for designating a light emission pattern of the light emitting element 21a to ch (channel) 1 of the D/A converter 41 via the I/O port 40. Further, the CPU 1 inputs a light emission instruction signal for instructing a light emission pattern of the light emitting element 22a to ch2 of the D/A converter 41 via the I/O port 40.

The D/A converter 41 carries out D/A conversion on the input light emission instruction signal. An output signal from the ch1 of the D/A converter 41 is input between a base and an emitter of the NPN type transistor 43 after being amplified by the operational amplifier 42. An output signal from the ch2 of the D/A converter 41 is input between a base and an emitter of the NPN type transistor 47 after being amplified by the operational amplifier 46.

The NPN type transistor 43 applies a direct voltage Vcc to the light emitting element 21a of the transmission type sensor 21 if an output voltage of the operational amplifier 42 is applied between the base and the emitter. The light emitting element 21a emits light according to the direct voltage Vcc.

In the transmission type sensor 21, the light emitting element 21a and the light receiving element 21b are arranged in such a position relationship that the light emitting element 21a and the light receiving element 21b face each other across the printing medium. The light emitting element 21a emits the light to the printing medium. The light receiving element 21b detects the light transmitted through the printing medium.

The light receiving element 21b applies the direct voltage Vcc to the resistor 45 via a collector-emitter. The light receiving element 21b outputs a voltage generated in the resistor 45 to the channel ch1 of the A/D converter 50 as an output of the transmission type sensor 21.

The NPN type transistor 47 applies the direct voltage Vcc to the light emitting element 22a of the reflection type sensor 22 if an output voltage from the operational amplifier 46 is applied between a base and an emitter. The light emitting element 22a emits light according to the direct voltage Vcc.

In the reflection type sensor 22, the light emitting element 22a and the light receiving element 22b are arranged in such a manner that the light emitting element 22a and the light receiving element 22b are arranged in parallel in the same direction with respect to the printing medium. The light emitting element 22a emits the light to the printing medium. The light receiving element 22b detects the light reflected by the printing medium.

The light receiving element 22b applies the direct voltage Vcc to the resistor 49 via a collector-emitter. The light receiving element 22b outputs a voltage generated in the resistor 49 to the channel ch2 of the A/D converter 50 as an output of the reflection type sensor 22.

The A/D converter 50 carries out A/D conversion on the output voltage of the light receiving element 21b input to the channel ch1. The A/D converter 50 outputs a digital signal generated through the A/D conversion to the CPU 1 via the I/O port 40 as the output signal of the transmission type sensor 21.

Further, the A/D converter 50 carries out A/D conversion on the output voltage of the light receiving element 22b input to the channel ch2. The A/D converter 50 outputs a digital signal generated through the A/D conversion to the CPU 1 via the I/O port 40 as the output signal of the reflection type sensor 22.

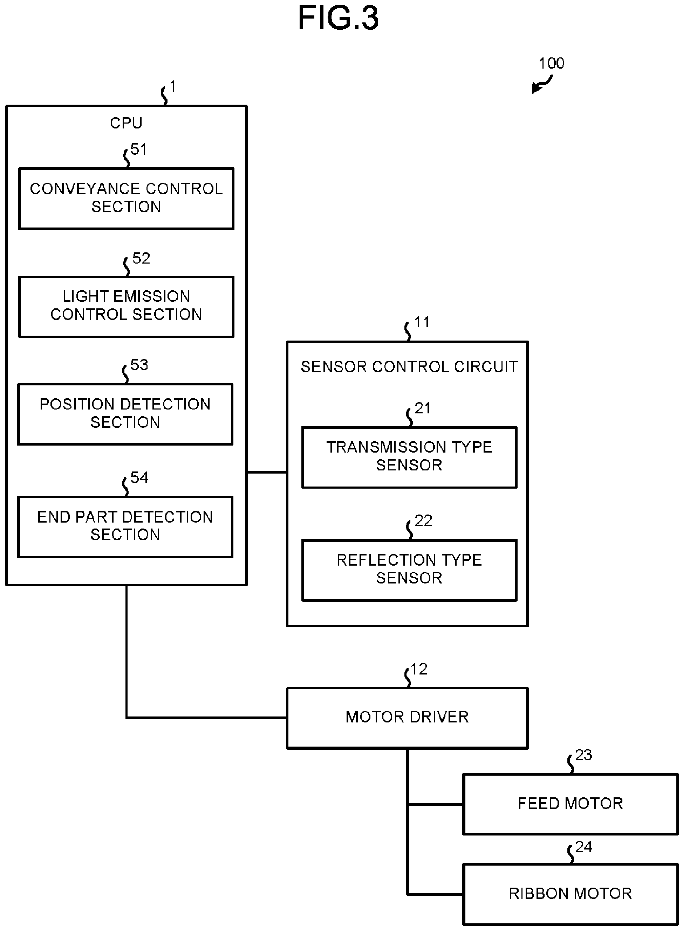

Next, functional components of programs of the present embodiment are described. Fig. 3 is a functional block diagram illustrating the label printer 100. The CPU 1 of the label printer 100 carries out the programs of the present embodiment which are stored in the ROM 2 to function as a conveyance control section 51, a light emission control section 52, a position detection section 53 and an end part detection section 54.

The conveyance control section 51 carries out drive control of the feed motor 23 and the ribbon motor 24 via the motor driver 12 if receiving print data (print command) via the host computer 30 or the keyboard 8. In this way, the conveyance control section 51 controls paper conveyance by the feed motor 23 and controls cartridge conveyance by the ribbon motor 24.

In a case in which the feed motor 23 is the stepping motor, the conveyance control section 51 generates a pulse signal having frequency corresponding to a resolution designated by the print command, and outputs the pulse signal to the motor driver 12. The motor driver 12 controls a rotation angle (rotation amount) and a rotation speed of the stepping motor according to the input pulse signal.

Further, the conveyance control section 51 stops the feed motor 23 and the ribbon motor 24 if the end part detection section 54 detects an end part of the printing medium (label paper or tag paper).

The light emission control section 52 controls a light emission operation of the light emitting element 21a of the transmission type sensor 21 or the light emitting element 22a of the reflection type sensor 22 according to the type of the printing medium instructed in the print data (print command) input from the host computer 30 or the keyboard 8.

Further, the light emission control section 52 alternately switches a single light emission period and a both light emission period to control the light emission of the light emitting element 21a and the light emitting element 22a. The single light emission period refers to a period in which either the light emitting element 21a of the transmission type sensor 21 or the light emitting element 22a of the reflection type sensor 22 emits the light. The both light emission period refers to a period in which both the light emitting element 21a of the transmission type sensor 21 and the light emitting element 22a of the reflection type sensor 22 emit the light. Further, the light emission control section 52 arranges the both light emission period each time the conveyance control section 51 conveys the printing medium (for example, the label paper or the tag paper) by a predetermined distance.

The position detection section 53 detects a position indicating a print area on a paper if the conveyance of the paper is started. Further, the position detection section 53 detects the print area (that is, an area in which a label is stuck) on the label paper if the print command is a print command to the label paper. Further, the position detection section 53 detects a black mark serving as an index of the print area on the tag paper if the print command is a print command to the tag paper.

The end part detection section 54 detects the end part of the printing medium on the basis of the output of the light receiving element 21b of the transmission type sensor 21 or the light receiving element 22b of the reflection type sensor 22.

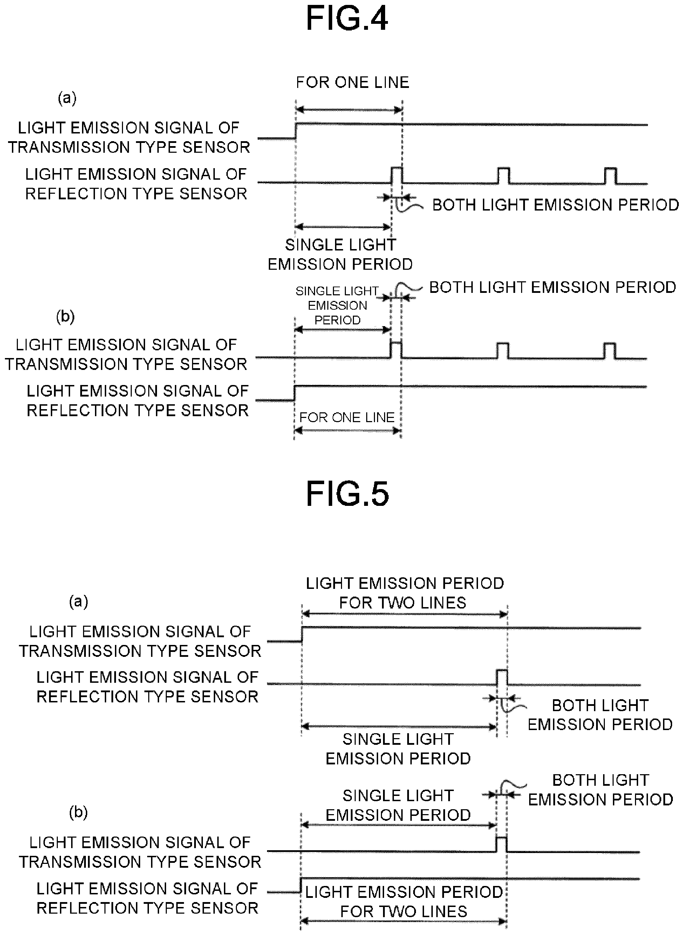

Next, a light emission control method of the light emitting elements 21a and 22a by the light emission control section 52 is described by exemplifying a concrete example of a light emission signal. Fig. 4 is a schematic diagram illustrating an example of the light emission signal in a case in which the both light emission period is arranged for each paper conveyance operation for one line.

Fig. 4 (a) illustrates an example of the light emission signal in a case in which the print command to the label paper is input. In the case of the print command to the label paper, the position detection section 53 carries out the position detection of the label paper with the transmission type sensor 21. Thus, if the print command to the label paper is input, the light emission control section 52 sets the light emission signal output to the light emitting element 21a of the transmission type sensor 21 as HI to enable the light emitting element 21a to continuously emit the light until paper feed corresponding to a printing length is ended. On the other hand, the light emission control section 52 intermittently sets the light emission signal of the light emitting element 22a of the reflection type sensor 22 as the HI to enable the light emitting element 22a to intermittently emit the light.

As shown in Fig. 4 (a), a period in which the light emitting element 22a emits the light while the label paper is conveyed for one line in a conveyance direction is set to a light emission period for one line. The light emission control section 52 sets the light emission signal of the light emitting element 22a of the reflection type sensor 22 as the HI only in a fixed period of the light emission period for one line and enables both the light emitting element 21a and the light emitting element 22a to emit the light only in the fixed period. In other words, the light emission control section 52 alternately switches the single light emission period in which only the light emitting element 21a of the transmission type sensor 21 emits the light and the both light emission period in which both of the light emitting elements 21a and 22a emit the light for each conveyance operation for one line.

The single light emission period is arranged in order to detect a position of a label, and the both light emission period is arranged in order to detect a paper end part. It is efficient that the detection of the paper end part is carried out at a timing at which the label paper is sent out by one step by the feed motor 23 (for example, the stepping motor) after the printing operation for one line is completed. Thus, the both light emission period is arranged at the end of the light emission period for one line, and is set as a shorter period than the single light emission period. Then, a longer period than the first half of the light emission period for one line is set as the single light emission period, and the light emitting element 22a which is not used for alignment is turned off. In this way, influence of sneaking of the light from the light emitting element 22a to the light receiving element 21b is reduced, and the precision of the alignment can be improved.

Fig. 4 (b) illustrates an example of the light emission signal in a case in which the print command to the tag paper is input. In the case of the print command to the tag paper, the position detection section 53 carries out the position detection of the tag paper by the reflection type sensor 22. Thus, if the print command to the tag paper is input, the light emission control section 52 sets the light emission signal output to the light emitting element 22a of the reflection type sensor 22 as the HI to enable the light emitting element 22a to continuously emit the light until paper feed corresponding to a printing length is ended. On the other hand, the light emission control section 52 intermittently sets the light emission signal of the light emitting element 21a of the transmission type sensor 21 as the HI to enable the light emitting element 21a to intermittently emit the light.

As shown in Fig. 4 (b), a period in which the light emitting element 21a emits the light while the tag paper is conveyed for one line in the conveyance direction is set to the light emission period for one line. The light emission control section 52 sets the light emission signal of the light emitting element 21a of the transmission type sensor 21 as the HI only in a fixed period of the light emission period for one line and enables both the light emitting element 21a and the light emitting element 22a to emit the light only in the fixed period. In other words, the light emission control section 52 alternately switches the single light emission period in which only the light emitting element 22a of the reflection type sensor 22 emits the light and the both light emission period in which both of the light emitting elements 21a and 22a emit the light for each conveyance operation for one line.

The single light emission period is arranged in order to detect the black mark (dark color index mark) on the tag paper, and the both light emission period is arranged in order to detect the paper end part. Similar with the light emission control at the time of printing on the label paper as described above, a longer period than the first half of the light emission period for one line is set as the single light emission period, and the light emitting element 21a which is not used for the alignment is turned off. In this way, the influence of the sneaking of the light from the light emitting element 21a to the light receiving element 22b is reduced, and the precision of the alignment can be improved.

In Fig. 4, an example of the control for arranging the both light emission period at one frequency per light emission period for one line is illustrated. The paper end can be easily detected more quickly by arranging the both light emission period at the frequency to carry out the detection of the end part.

In this manner, in the label printer 100 of the present embodiment, the light emitting element of the sensor that carries out the position detection is continuously lighted, and on the other hand, the light emitting element of the sensor that does not carry out the position detection intermittently emits the light in a blinking manner. Further, a cycle of the blinking is synchronized with a cycle of the conveyance operation of the stepping motor as an example.

Further, the frequency at which the both light emission period is arranged is not limited to the forgoing example; the both light emission period may be arranged in a fixed cycle that is predetermined according to the paper conveyance operation. In other words, the both light emission period may be arranged each time the conveyance control section 51 conveys the printing medium for a predetermined number of lines. The both light emission periods may be arranged more closely than the example in Fig. 4, and conversely, may be arranged at intervals. Otherwise, the both light emission period may be set from the host computer 30 or the keyboard 8. As another example in Fig. 5, a light emission pattern in a case in which the both light emission period is arranged every other line is described.

Fig. 5 is a schematic diagram illustrating an example of a light emission signal in a case in which the both light emission period is arranged for each paper conveyance operation for two lines. Fig. 5 (a) illustrates an example of the light emission signal in a case in which the print command to the label paper is input. Fig. 5 (b) illustrates an example of the light emission signal in a case in which the print command to the tag paper is input. As shown in Fig. 5 (a) and Fig. 5 (b), the both light emission period may be arranged at one frequency in a light emission period for two lines. In this manner, a period in which the sneaking of the light can be reduced can be a longer period by making the single light emission period longer.

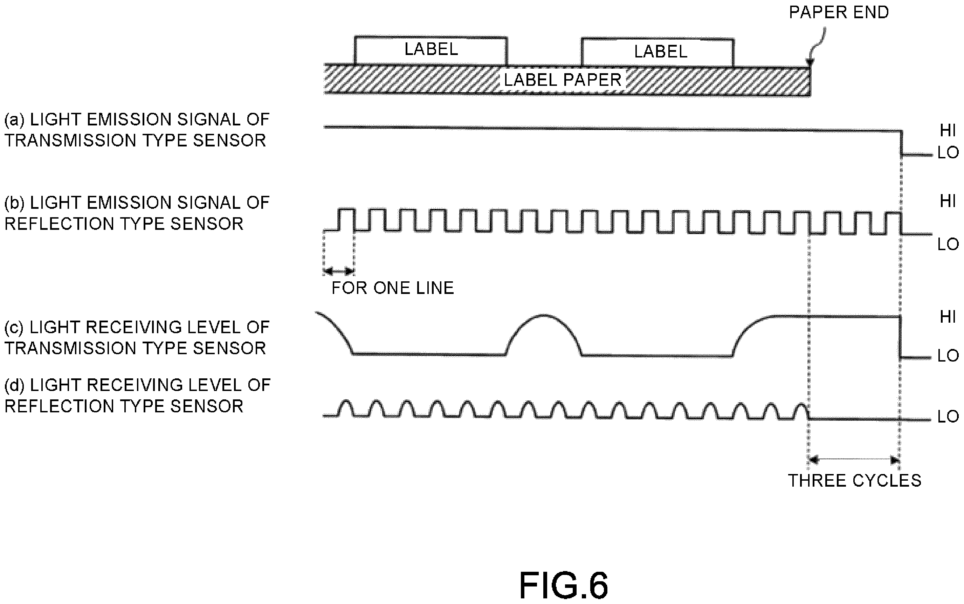

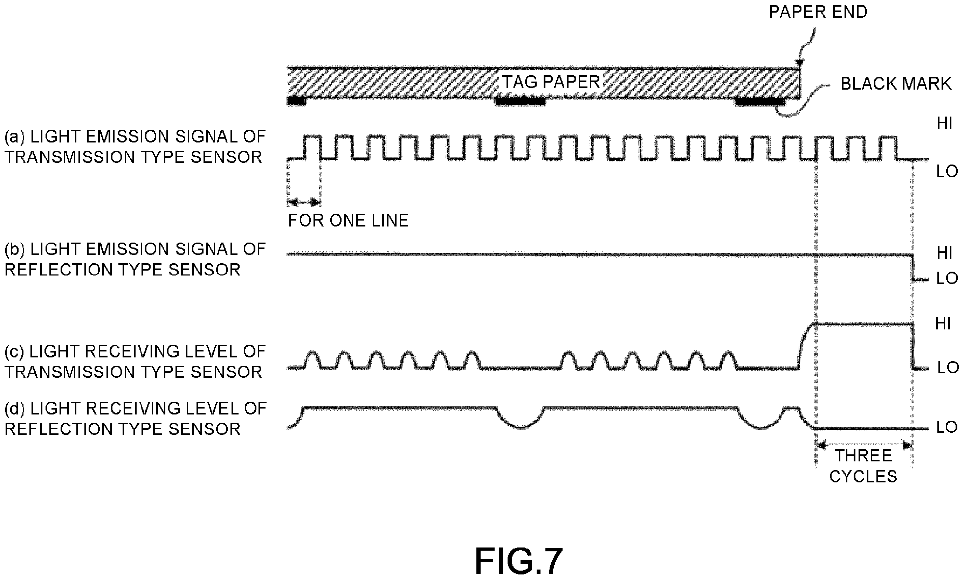

Next, operations for detecting the paper end part are described with reference to Fig. 6 and Fig. 7.

Fig. 6 is a diagram illustrating the operations for detecting an end part of the label paper. If the print command to the label paper is input, the light emission control section 52 outputs the light emission signal that is continuously in an HI state to the light emitting element 21a of the transmission type sensor 21 as shown in Fig. 6 (a). Further, as shown in Fig. 6 (b), the light emission control section 52 outputs the light emission signal of which the HI and the LO are periodically switched to the light emitting element 22a of the reflection type sensor 22.

Since the light from the light emitting element 21a is transmitted through a part of the label paper of a gap between a label and a label more easily, a light receiving level (in other words, the output voltage) of the light receiving element 21b of the transmission type sensor 21 is increased at the gap between the label and the label as shown in Fig. 6 (c).

The position detection section 53 detects a part where the light receiving level is equal to or greater than a predetermined threshold value as a position of the gap between the labels (so-called label gap). Further, the position detection section 53 infers a printing position from the position of the label gap to carry out an adjustment of the printing position.

On the other hand, a light receiving level of the light receiving element 22b of the reflection type sensor 22 periodically has a peak in a shape synchronized with the light emission pattern of the light emitting element 22a of the reflection type sensor 22 in general as shown in Fig. 6 (d) . Then, an end part (paper end) of the label paper comes to detection positions of the transmission type sensor 21 and the reflection type sensor 22 (in other words, positions of the light receiving elements 21b and 22b). Thereupon, since there is no paper and the light directly enters the light receiving element 21b, the HI state of the light receiving level of the transmission type sensor 21 is continuous as shown in Fig. 6 (c) . On the other hand, since there is no reflection from the paper, the LO state of the light receiving level of the reflection type sensor 22 is continuous as shown in Fig. 6 (d).

In this manner, if the state in which the light receiving level of the light receiving element 21b of the transmission type sensor 21 is the HI and the light receiving level of the light receiving element 22b of the reflection type sensor 22 is the LO is continuous in a fixed period, the end part detection section 54 determines that the end part of the label paper is detected, in other words, paper shortage of the label paper is detected. In Fig. 6, in a case in which a light emission cycle in which the HI and the LO are for three cycles, that is, three lines is continuous, the paper end is detected. Further, the detection condition of the paper end is not limited to this; at the time the states of the HI and the LO are continuous in a predetermined cycle which is preset, the paper end may be detected.

If the paper end of the label paper is detected, the conveyance control section 51 stops the feed motor 23 and the ribbon motor 24. Further, the light emission control section 52 stops the light emission of the light emitting elements 21a and 22a as shown in Fig. 6 (a) and Fig. 6 (b) .

Fig. 7 is a diagram illustrating the operations for detecting an end part of the tag paper. If the print command of the tag paper is input, the light emission control section 52 outputs the light emission signal that is continuously in the HI state to the light emitting element 22a of the reflection type sensor 22 as shown in Fig. 7 (b) . Further, the light emission control section 52 outputs the light emission signal of which the HI and the LO are periodically switched to the light emitting element 21a of the transmission type sensor 21 as shown in Fig. 7 (a).

The reflectance of the light from the light emitting element 22a is reduced due to a black mark on the back surface of the tag paper. Thus, the light receiving level (in other words, the output voltage) of the light receiving element 22b of the reflection type sensor 22 is decreased at the position of the black mark as shown in Fig. 7 (d).

The position detection section 53 detects a part where the light receiving level is equal to or smaller than a predetermined threshold value as the position of the black mark. Further, the position detection section 53 infers a printing position from the position of the black mark to carry out an adjustment of the printing position.

As shown in Fig. 7 (c) and Fig. 7 (d), the light receiving levels of the transmission type sensor 21 and the reflection type sensor 22 at the end part (paper end) of the tag paper indicate the same behaviors as the light receiving levels at the end part of the label paper as shown in Fig. 6 (c) and Fig. 6 (d). In other words, the HI state of the light receiving level of the transmission type sensor 21 is continuous as shown in Fig. 7 (c), and the LO state of the light receiving level of the reflection type sensor 22 is continuous as shown in Fig. 7 (d).

In this case, the end part detection section 54 determines that the end part of the tag paper is detected, in other words, paper shortage of the tag paper is detected. The condition under which the end part of the tag paper is detected may be the same as the condition under which the end part of the label paper is detected. If the paper end of the tag paper is detected, the conveyance control section 51 stops the feed motor 23 and the ribbon motor 24. Further, the light emission control section 52 stops the light emission of the light emitting elements 21a and 22a as shown in Fig. 7 (a) and Fig. 7 (b).

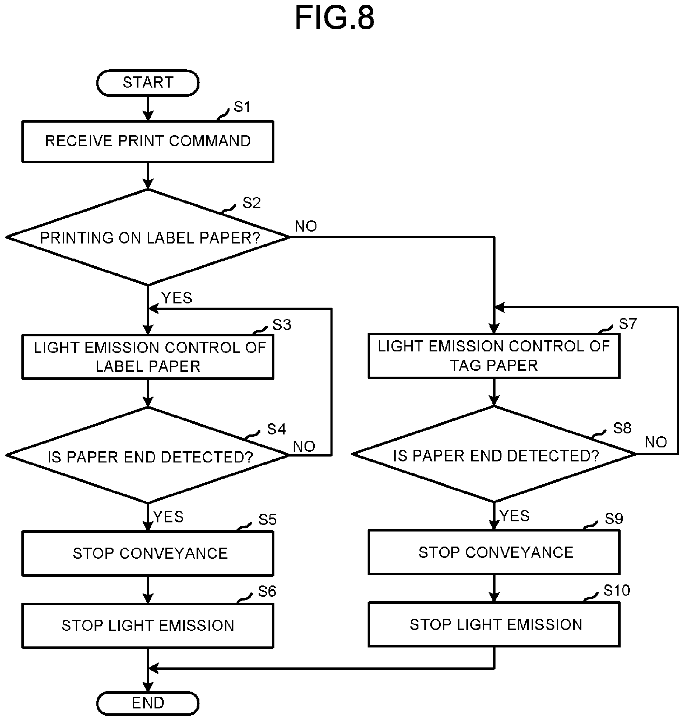

Next, procedures of a light emission control processing are described. Fig. 8 is a flowchart illustrating the procedures of the light emission control processing carried out by the label printer 100.

The light emission control section 52 receives a print command via the host computer 30 or the keyboard 8 (Act S1). If the printing on the label paper is instructed in the print command (Yes in Act S2), the light emission control section 52 starts light emission control to the label paper (Act S3) . In other words, the light emission control section 52 outputs the light emission signal that is continuously in the HI state to the transmission type sensor 21 as exemplified in Fig. 4 (a). On the other hand, the light emission control section 52 outputs the light emission signal that is in the HI state only in a predetermined period at the end of the light emission period for one line to the reflection type sensor 22 as exemplified in Fig. 4 (a). In this way, the light emission control section 52 enables the light emitting element 22a of the reflection type sensor 22 which is not involved in the position detection of the label paper to intermittently emit the light. The position detection section 53 starts the detection operation of a label position on the label paper.

The end part detection section 54 determines whether or not the paper end of the label paper is detected on the basis of the output of the transmission type sensor 21 and the reflection type sensor 22 (Act S4). If the paper end of the label paper is not detected (No in Act S4), the processing returns to Act S3. If the paper end of the label paper is detected (Yes in Act S4), the conveyance control section 51 stops the feed motor 23 and the ribbon motor 24 to stop the conveyance of the label paper and the ink ribbon (Act S5). Further, the light emission control section 52 stops the light emission of the light emitting elements 21a and 22a (Act S6).

On the other hand, if the printing on the tag paper but not the printing on the label paper is instructed in the print command (No in Act S2), the light emission control section 52 starts light emission control to the tag paper (Act S7) . In other words, the light emission control section 52 outputs the light emission signal that is continuously in the HI state to the reflection type sensor 22 as exemplified in Fig. 4 (b). On the other hand, the light emission control section 52 outputs the light emission signal that is in the HI state only in a predetermined period at the end of the light emission period for one line to the transmission type sensor 21 as exemplified in Fig. 4 (b) . In this way, the light emission control section 52 enables the light emitting element 21a of the transmission type sensor 21 which is not involved in the position detection of the tag paper to intermittently emit the light. The position detection section 53 starts the detection operation of the black mark on the tag paper.

The end part detection section 54 determines whether or not the paper end of the tag paper is detected on the basis of the output of the transmission type sensor 21 and the reflection type sensor 22 (Act S8). If the paper end of the tag paper is not detected (No in Act S8), the processing returns to Act S7. If the paper end of the tag paper is detected (Yes in Act S8), the conveyance control section 51 stops the feed motor 23 and the ribbon motor 24 to stop the conveyance of the tag paper and the ink ribbon (Act S9). Further, the light emission control section 52 stops the light emission of the light emitting elements 21a and 22a (Act S10).

In the foregoing description, the transmission type sensor 21 and the reflection type sensor 22 respectively include the light receiving element 21b and the light receiving element 22b and detect transmitted light or reflected light; however, the constitution of the sensor is not limited to this. For example, the transmission type sensor 21 and the reflection type sensor 22 may share one light receiving element; on the contrary, each sensor may use two or more sensors.

The program executed by the label printer 100 of the present embodiment is incorporated into the ROM in advance to be provided. The program executed by the label printer 100 of the present embodiment may be recorded in a computer-readable recording medium such as a CD-ROM, a FD (Flexible Disk), a CD-R, a DVD (Digital Versatile Disk) and the like in the form of installable or executable file to be provided.

Furthermore, the program executed by the label printer 100 of the present embodiment may be stored on a computer connected with a network such as the Internet and downloaded via the network to be provided. Further, the program executed by the label printer 100 of the present embodiment may be provided or distributed via the network such as the Internet.

While certain embodiments have been described, these embodiments have been presented by way of example only, and are not intended to limit the scope of the invention. Indeed, the novel embodiments described herein may be embodied in a variety of other forms; furthermore, various omissions, substitutions and changes in the form of the embodiments described herein may be made without departing from the framework of the invention. The accompanying claims and their equivalents are intended to cover such forms or modifications as would fall within the scope of the invention.

As stated above, in the foregoing embodiment, the light emission control for switching the single light emission period in which the light emitting element of the sensor at one side emits the light to carry out the position detection and the both light emission period in which the light emitting elements of both the transmission type sensor and the reflection type sensor emit the light to detect the paper end is carried out. In this way, both the improvement of the detection precision of the printing position and the improvement of the detection precision of the paper end can be realized.

## Claims

1. A thermal printer (**10**), comprising:
a transmission type sensor (**21**) configured to enable a first light emitting element (**21a**) to emit a first light to irradiate a printing medium with the first light and to detect the first light transmitted through the printing medium;
a reflection type sensor (**22**) configured to enable a second light emitting element (**22a**) to emit a second light to irradiate a printing medium with the second light and to detect the second light reflected by the printing medium;
a light emission control module (**52**) configured to alternately switch between a single light emission period in which either the first light emitting element or the second light emitting element emits light and a both light emission period in which both the first light emitting element and the second light emitting element emit light;
a conveyance control module (**51**) configured to control conveyance of the printing medium,
wherein the light emission control module arranges the both light emission period each time the conveyance control module conveys the printing medium by a predetermined distance;
wherein the light emission control module arranges the both light emission period each time the conveyance control module conveys the printing medium either for one line or for a predetermined number of lines; and
an end part detection module (**54**) configured to detect an end part of the printing medium on the basis of detection results of the transmission type sensor and the reflection type sensor in the both light emission period.

2. The thermal printer according to claim 1, wherein the light emission control module is further configured to switch between a HI state and a LO state.

3. The thermal printer according to claim 1 or 2. wherein the transmission type sensor comprises the first light emitting element and a first light receiving element arranged to face each other across the printing medium.

4. The thermal printer according to any one of claims 1 to 3, wherein
the reflection type sensor comprises the second light emitting element and a second light receiving element arranged in parallel in a same direction with respect to the printing medium.

5. The thermal printer according to any one of claims 1 to 4, wherein
the first light and the second light have the same wavelength or range of wavelengths.

6. The thermal printer according to any one of claims 1 to 4, wherein
the first light and the second light have a different wavelength or a different range of wavelengths.

7. The thermal printer according to any one of claims 1 to 6, wherein the thermal printer is a label printer suitable for printing on a label paper.

8. A method for improving detection precision by a thermal printer (**10**) which comprises a transmission type sensor (**21**) configured to enable a first light emitting element (**21a**) to emit a first light to irradiate a printing medium with the first light and to detect the first light transmitted through the printing medium, and a reflection type sensor (**22**) configured to enable a second light emitting element to emit a second light to irradiate a printing medium with the second light and to detect the second light reflected by the printing medium, comprising:
alternately switching between a single light emission period in which either the first light emitting element or the second light emitting element emits light and a both light emission period in which both the first light emitting element and the second light emitting element emit light.
conveying of the printing medium;
arranging the both light emission period each time the printing medium is conveyed a predetermined distance.
arranging the both light emission period each time the printing medium is conveyed either one line or a predetermined number of lines and
detecting an end part of the printing medium on the basis of detection results of the transmission type sensor and the reflection type sensor in the both light emission period.

9. The thermal printer according to claim 8, wherein the printing medium is a label paper.

## Patentansprüche

1. Thermodrucker (10), umfassend:
einen Transmissionstypsensor (21), konfiguriert um einem ersten lichtemittierenden Element (21a) zu ermöglichen, ein erstes Licht zu emittieren, um ein Druckmedium mit dem ersten Licht zu bestrahlen, und um das durch das Druckmedium hindurch transmittierte erste Licht zu erfassen;
einen Reflexionstypsensor (22), konfiguriert um einem zweiten lichtemittierenden Element (22a) zu ermöglichen, ein zweites Licht zu emittieren, um ein Druckmedium mit dem zweiten Licht zu bestrahlen, und um das von dem Druckmedium reflektierte zweite Licht zu erfassen;
ein Lichtemissionssteuer- bzw. -regelmodul (52), konfiguriert um abwechselnd zu schalten zwischen einer Einfach-Lichtemissionsperiode, in der entweder das erste lichtemittierende Element oder das zweite lichtemittierende Element Licht emittiert, und einer Zweifach-Lichtemissionsperiode, in welcher sowohl das erste lichtemittierende Element als auch das zweite lichtemittierende Element Licht emittiert;
ein Beförderungssteuer- bzw. -regelmodul (51), konfiguriert um die Beförderung des Druckmediums zu steuern bzw. zu regeln,
wobei das Lichtemissionssteuer- bzw. -regelmodul die Zweifach-Lichtemissionsperiode jedes Mal arrangiert, wenn das Beförderungssteuer- bzw. -regelmodul das Druckmedium um eine vorbestimmte Distanz befördert;
wobei das Lichtemissionssteuer- bzw. -regelmodul die Zweifach-Lichtemissionsperiode jedes Mal arrangiert, wenn das Beförderungssteuer- bzw. -regelmodul das Druckmedium entweder um eine Zeile oder um eine vorbestimmte Zahl von Zeilen befördert; und
ein Endteilerfassungsmodul (54), konfiguriert um ein Endteil des Druckmediums auf der Basis von Erfassungsresultaten des Transmissionstypsensors und des Reflexionstypsensors in der Zweifach-Lichtemissionsperiode zu erfassen.

2. Thermodrucker gemäß Anspruch 1, wobei das Lichtemissionssteuer- bzw. -regelmodul ferner konfiguriert ist, um zwischen einem HI-Zustand und einem LO-Zustand zu wechseln.

3. Thermodrucker gemäß Anspruch 1 oder 2, wobei der Transmissionstypsensor das erste lichtemittierende Element und ein erstes lichtempfangendes Element umfasst, angeordnet um einander über das Druckmedium hinweg gegenüberzuliegen.

4. Thermodrucker gemäß einem der Ansprüche 1 bis 3, wobei der Reflexionstypsensor das zweite lichtemittierende Element und ein zweites lichtempfangendes Element enthält, parallel angeordnet in einer selben Richtung hinsichtlich des Druckmediums.

5. Thermodrucker gemäß einem der Ansprüche 1 bis 4, wobei das erste Licht und das zweite Licht dieselbe Wellenlänge oder denselben Wellenlängenbereich haben.

6. Thermodrucker gemäß einem der Ansprüche 1 bis 4, wobei das erste Licht und das zweite Licht eine verschiedene Wellenlänge oder einen verschiedenen Wellenlängenbereich haben.

7. Thermodrucker gemäß einem der Ansprüche 1 bis 6, wobei der Thermodrucker ein Etikettendrucker ist, geeignet zum Drucken auf ein Etikettenpapier.

8. Verfahren zur Verbesserung der Erfassungspräzision durch einen Thermodrucker (10), der einen Transmissionstypsensor (21) umfasst, konfiguriert um einem ersten lichtemittierenden Element (21a) zu ermöglichen, ein erstes Licht zu emittieren, um ein Druckmedium mit dem ersten Licht zu bestrahlen, und um das durch das Druckmedium hindurch transmittierte erste Licht zu erfassen, und einen Reflexionstypsensor (22), konfiguriert um einem zweiten lichtemittierenden Element zu ermöglichen, ein zweites Licht zu emittieren, um ein Druckmedium mit dem zweiten Licht zu bestrahlen, und um das von dem Druckmedium reflektierte zweite Licht zu erfassen, umfassend:
abwechselndes Schalten zwischen einer Einfach-Lichtemissionsperiode, in welcher entweder das erste lichtemittierende Element oder das zweite lichtemittierende Element Licht emittiert, und einer Zweifach-Lichtemissionsperiode, in welcher sowohl das erste lichtemittierende Element als auch das zweite lichtemittierende Element Licht emittieren.
Befördern des Druckmediums;
Arrangieren der Zweifach-Lichtemissionsperiode jedes Mal, wenn das Druckmedium eine vorbestimmte Distanz befördert wird,
Arrangieren der Zweifach-Lichtemissionsperiode jedes Mal, wenn das Druckmedium entweder um eine Zeile oder um eine vorbestimmte Zahl von Zeilen befördert wird, und
Erfassen eines Endteils des Druckmediums auf der Basis von Erfassungsdaten des Transmissionstypsensors und des Reflexionstypsensors in der Zweifach-Lichtemissionsperiode.

9. Thermodrucker gemäß Anspruch 8, wobei das Druckmedium ein Etikettenpapier ist.

## Revendications

1. Imprimante thermique (10), comprenant :
un capteur du type émission (21) configuré de manière à permettre l'émission par un premier élément d'émission de lumière (21a) d'une première lumière afin d'éclairer un support d'impression avec la première lumière et de détecter la première lumière transmise à travers le support d'impression ;
un capteur du type réflexion (22) configuré de manière à permettre l'émission par un second élément d'émission de lumière (22a) d'une seconde lumière afin d'éclairer un support d'impression avec la seconde lumière et de détecter la seconde lumière réfléchie par le support d'impression ;
un module de commande d'émission de lumière (52) configuré de manière à commuter en alternance entre une période d'émission de lumière simple dans laquelle l'un ou l'autre du premier élément d'émission de lumière ou du second élément d'émission de lumière émet de la lumière et une période d'émission des deux lumière dans laquelle le premier élément d'émission de lumière et le second élément d'émission de lumière émettent de la lumière ;
un module de commande de transfert (51) configuré de manière à commander le transfert du support d'impression,
dans laquelle le module de commande d'émission de lumière déclenche la période d'émission des deux lumières chaque fois que le module de commande de transfert déplace le support d'impression sur une distance prédéterminée ;
dans laquelle le module de commande d'émission de lumière déclenche la période d'émission des deux lumières chaque fois que le module de commande de transfert déplace le support d'impression soit sur une ligne soit sur un nombre de lignes prédéterminé ; et
un module de détection de partie d'extrémité (54) configuré de manière à détecter une partie d'extrémité du support d'impression sur la base de résultats de détection du capteur du type émission et du capteur du type réflexion dans la période d'émission des deux lumières.

2. Imprimante thermique selon la revendication 1, dans laquelle le module de commande d'émission de lumière est, en outre, configuré de manière à commuter entre un état HAUT et un état BAS.

3. Imprimante thermique selon la revendication 1 ou 2, dans laquelle le capteur du type émission comprend le premier élément d'émission de lumière et un premier élément de réception de lumière agencés l'un face à l'autre à travers le support d'impression.

4. Imprimante thermique selon l'une quelconque des revendications 1 à 3, dans laquelle
le capteur du type réflexion comprend le second élément d'émission de lumière et un second élément de réception de lumière agencés parallèlement à une même direction par rapport au support d'impression.

5. Imprimante thermique selon l'une quelconque des revendications 1 à 4, dans laquelle
la première lumière et la seconde lumière présentent la même longueur d'onde ou plage de longueurs d'ondes.

6. Imprimante thermique selon l'une quelconque des revendications 1 à 4, dans laquelle
la première lumière et la seconde lumière présentent une longueur d'onde différente ou une plage de longueurs d'ondes différente.

7. Imprimante thermique selon l'une quelconque des revendications 1 à 6, dans laquelle l'imprimante thermique est une imprimante pour étiquette adaptée afin d'imprimer sur un papier pour étiquettes.

8. Procédé destiné à améliorer la précision de détection par une imprimante thermique (10) qui comprend un capteur du type émission (21) configuré de manière à permettre à un premier élément d'émission de lumière (21a) d'émettre une première lumière afin d'éclairer un support d'impression avec la première lumière et de détecter la première lumière transmise à travers le support d'impression, et un capteur du type réflexion (22) configuré de manière à permettre à un second élément d'émission de lumière d'émettre une seconde lumière afin d'éclairer un support d'impression avec la seconde lumière et de détecter la seconde lumière réfléchie par le support d'impression, comprenant :
la commutation de manière alternée entre une période d'émission de lumière simple dans laquelle l'un ou l'autre du premier élément d'émission de lumière ou du second élément d'émission de lumière émet de la lumière et une période d'émission des deux lumières dans laquelle à la fois le premier élément d'émission de lumière et le second élément d'émission de lumière émettent de la lumière.
le transfert du support d'impression ;
le déclenchement de la période d'émission des deux lumières chaque fois que le support d'impression est déplacé sur une distance prédéterminée ;
le déclenchement de la période d'émission des deux lumières chaque fois que le support d'impression est déplacé sur une ligne ou un nombre de lignes prédéterminé ; et
la détection d'une partie d'extrémité du support d'impression sur la base des résultats de détection du capteur du type émission et du capteur du type réflexion pendant la période d'émission des deux lumières.

9. Imprimante thermique selon la revendication 8, dans laquelle le support d'impression est du papier pour étiquettes.
